# EUROPEAN PATENT SPECIFICATION

(11) **EP 2 315 803 B1**
(45) Date of publication and mention of the grant of the patent: **13.01.2016**
(21) Application number: 09809326.3
(22) Date of filing: 24.08.2009
(51) Int. Cl.: C08K 5/01, C08K 5/20, C08L 17/00, C08L 19/00, C08L 21/00, C08L 51/06, C08L 91/00, C08L 95/00, E01C 7/26

(54) **BITUMEN COMPOSITION**
BITUMENZUSAMMENSETZUNG
Composition de bitume

(30) Priority: 25.08.2008 EP 08162909
(43) Date of publication of application: 04.05.2011
(73) Proprietor: Shell Internationale Research Maatschappij B.V., 2596 HR Den Haag (NL)
(72) Inventor: DE JONGE, Frits, Singapore 239920 (SG); NG, Sean Lok, Kuala Lumpur 50088 (MY); NIGEN-CHAIDRON, Sophie, Kuala Lumpur 50088 (MY)
(74) Representative: Matthezing, Robert Maarten
(86) International application number: PCT/EP2009/060854
(87) International publication number: WO 2010/023173

(56) References cited:
- US-A- 5 704 971
- US-A- 5 990 207
- US-B1- 6 478 951
- US-B1- 6 884 831

## Description

### Field of the Invention

The invention relates to a bitumen composition comprising crumb rubber.

### Background of the Invention

Bitumen is a viscous liquid or a solid consisting essentially of hydrocarbons and their derivatives. It is soluble in trichloroethylene and softens gradually when heated. Bitumen is combined with aggregate and filler to form asphalt, which is used to pave roads or other surfaces.

Crumb rubber, particles of rubber typically obtained from used vehicle tyres, can be incorporated into bitumen. This is a sustainable means of disposing of the crumb rubber and also improves the properties of the bitumen. The crumb rubber is mechanically dispersed in the bitumen. However, during storage the crumb rubber can settle in the bitumen matrix, leading to an inhomogeneous dispersion. Such dispersions can be difficult to transport as it is difficult to pump such dispersions between storage vessels and delivery vehicles. Therefore it is desirable to improve the storage stability of the crumb rubber modified bitumens.

Methods for improving the homogeneity of crumb rubber modified asphalt have been disclosed. In US 5,704,971, peroxide is mixed with the crumb rubber and then this is added to bitumen. A polymer such as a terpolymer of ethylene, butyl acrylate and glycidyl methacrylate is added to the mixture of crumb rubber and bitumen. In US 6,478,951, a polymer such as a copolymer of ethylene vinyl acetate and glycidyl-containing monomers, is coated onto crumb rubber particles that are subsequently stirred into hot liquid bitumen. Alternatively, the polymer is added to the liquid bitumen and then the crumb rubber particles are added.

US 5,990,207 discloses bitumen formulations comprising crumb rubber and copolymers of ethylene, alkyl acrylate and glycidyl methacrylate. The formulations are storage stable but have much higher viscosity than formulations that do not contain the ethylene/alkyl acrylate/glycidyl methacrylate copolymer.

The present inventors have sought to provide new crumb rubber bitumen compositions that exhibit effective storage stability. Preferably the compositions also have viscosity such that they are readily used to prepare asphalt.

### Summary of the Invention

Accordingly, the present invention provides a bitumen composition comprising:
(a) 20 to 96 wt% bitumen;
(b) 3 to 80 wt% of crumb rubber;
(c) 0.1 to 10 wt% of a polymer comprising glycidyl functional groups; and
(d) 0.3 to 5 wt% of a wax.

The weight percentages are based upon the weight of the bitumen composition.

The present inventors have found that crumb rubber bitumen compositions comprising both a glycidyl-functionalised polymer and a wax exhibit advantageous storage stability and useful viscosity.

### Detailed Description of the Invention

The bitumen in the bitumen composition of the invention may be a residue from the distillation of crude oil, a cracked residue, naturally occurring bitumen or a blend of various bitumen types. Examples of bitumen that may be conveniently used in the present invention include distillation or "straight run" bitumen, precipitation bitumen, e.g. propane bitumen, oxidised or blown bitumen, naphthenic bitumen or mixtures thereof. The bitumen in the bitumen composition may be prepared by blending a bitumen with a flux oil, e.g. an aromatic, napthenic or paraffinic flux oil. The bitumen can also be derived from a natural oil sand source or can contain components of renewable origin. The penetration at 25°C of the bitumen (as measured according to EN 1426) is preferably between 10 and 250. (If the bitumen is a blend of bitumen and flux oil, the penetration is preferably between 10 and 250 after the flux oil has been blended with the bitumen.)

The quantity of bitumen in the bitumen composition is from 20 to 96wt%, preferably from 30 to 92wt%. Bitumen is often the least expensive component in the composition so it is often desirable to maximise the quantity of bitumen. However, higher than 96wt% bitumen is not desirable as the amount of crumb rubber will be insufficient to achieve the desired improvement in binder properties. The composition of the invention may be a masterbatch composition, i.e. a composition containing a relatively high proportion of polymer that must be further diluted with bitumen before use. If the composition is not a masterbatch composition, i.e. it is suitable for use without further dilution, then the quantity of bitumen is preferably from 70 to 96wt%, preferably from 80 to 92wt%.

The crumb rubber is any rubber in particle form. Preferably the crumb rubber is ground tyre rubber. Preferably the mean average particle size is less than 5mm, more preferably less than 2mm and most preferably less than 1mm. The crumb rubber may be a synthetic elastomer such as polybutadiene or styrene-butadiene rubber (typically obtained from tyres of light vehicles). The crumb rubber may also be natural rubber (typically obtained from tyres of heavy vehicles).

The quantity of crumb rubber in the bitumen composition is from 3 to 80wt%, preferably from 6 to 70wt%. The composition of the invention may be a masterbatch composition, i.e. a composition containing a relatively high proportion of polymer that must be further diluted with bitumen before use. When the composition is ready for use in asphalt production, i.e. when there will be no further dilution with bitumen, then the quantity of crumb rubber is preferably from 3 to 20wt%, preferably from 6 to 15wt%.

The polymer comprising glycidyl functional groups is preferably either a copolymer wherein at least some of the monomers are glycidyl-containing monomers, or is a grafted polymer wherein glycidyl-containing groups have been grafted onto a polymer backbone. Preferred copolymers are copolymers of ethylene and glycidyl acrylate or methacrylate, or terpolymers of ethylene, alkyl acrylate or methacrylate and glycidyl acrylate or methacrylate. The alkyl acrylate is preferably C₁₋₆ alkyl. Preferred grafted polymers comprise glycidyl acrylate or methacrylate grafted onto a polyethylene backbone.

The quantity of the polymer comprising glycidyl functional groups in the bitumen composition is from 0.1 to 10wt%, preferably from 0.1 to 5wt%, more preferably from 0.2 to 2wt% and most preferably from 0.5 to 1.5%. The amount of polymer is a balance between using sufficient polymer to achieve storage stability and minimising polymer usage to minimise costs.

The wax in the bitumen composition is preferably a paraffin wax, and is more preferably a wax resulting from a Fischer-Tropsch process. Preferably the paraffin wax comprises at least 90wt% of straight chain alkanes. Preferably the alkane chain length is from C30 to about C100. Preferably the melting point of the paraffin wax is from 50 to 110°C, more preferably from 80 to 110°C. Alternatively the wax is ethylene bis-stearamide.

The quantity of wax in the bitumen composition is from 0.3 to 5wt%, preferably from 0.5 to 4wt% and more preferably from 1 to 3wt%. The amount of wax is a balance between using sufficient wax to achieve storage stability and minimising wax usage to minimise costs.

The bitumen composition may additionally comprise a semicrystalline rubber, such as a polyoctenamer, e.g. Vestenamer® from Evonik. The bitumen composition preferably comprises from 0 to 1wt% polyoctenamer, e.g. about 0.5wt% polyoctenamer.

The bitumen composition may additionally comprise a cross-linkable elastomer, for example styrenic block copolymers, styrene-butadiene rubbers (synthetic and natural). The cross-linkable elastomer is preferably a styrenic block copolymer such as styrene-butadienestyrene or styrene-isoprene-styrene. The amount of cross-linkable elastomer in the bitumen composition is preferably from 0.5 to 7wt%, based upon the weight of the bitumen composition, preferably from 1 to 4wt%. If the bitumen composition comprises a cross-linkable elastomer, the bitumen composition preferably further comprises a cross-linking agent. A preferred cross-linking agent is elemental sulphur. A preferred quantity of elemental sulphur is from 0.01 to 0.2wt%, based upon the weight of the bitumen composition.

The bitumen composition preferably has a viscosity at 150°C (measured according to ASTM D4404) of between 300 and 900 mPas (3 and 9 Poise).

The bitumen composition preferably has a storage stability after 24 hours at 163°C (measured according to ASTM D7173) of from -4°C to 4°C. A storage stability outside this range indicates that the composition is sufficiently inhomogeneous that it may be difficult to transport. Preferably the storage stability is as close to 0 as possible.

The bitumen composition preferably has a penetration at 25°C (measured according to ASTM D5) of less than 200 dmm, more preferably less than 150 dmm.

The bitumen composition preferably has a softening point (measured according to ASTM D36) of greater than 50°C, more preferably greater than 60°C.

The bitumen compositions are suitably prepared by a process wherein the bitumen is pre-heated such that it is fluid. Preferably the wax is added first because this lowers the viscosity of the composition thereby facilitating incorporation of the crumb rubber and polymer comprising glycidyl functional groups. There is no preferred order for the addition of the crumb rubber and polymer comprising glycidyl functional groups.

Preferably the components are mixed in a pre-mixing tank before passing through a high-shear mill. The use of high-shear is important to ensure a good dispersion of the crumb rubber particles.

Preferably the components are mixed at a temperature not exceeding 165°C and most preferably not exceeding 160°C. It has been observed that higher temperatures can cause changes in the crumb rubber particle properties and there can be an associated smell. Working at low temperature is therefore preferred on health and safety grounds.

When the mixing is completed, it is recommended to continue circulation of the composition in a storage tank but no curing time is required.

The bitumen composition of the invention may be a masterbatch composition comprising a high proportion of polymer (e.g. greater than 20wt% crumb rubber and/or greater than 2wt% polymer comprising glycidyl groups) and it may be necessary to dilute the bitumen composition with additional bitumen before it is used to prepare asphalt mixture.

Bitumen compositions according to the invention, optionally diluted with further bitumen, are suitably used to prepare asphalt mixtures that can be used in paving applications. Therefore, the invention further provides an asphalt mixture comprising a bitumen composition according to the invention and further comprising aggregate. The aggregate may consist of filler, sand and/or stones. There are many different types of asphalt mixture available and their characteristics can vary quite significantly. The design of asphalts for paving application is largely a matter of selecting and proportioning materials to obtain the desired properties in the finished construction. The design of the asphalt mixture is typically based on the grading of aggregates and asphalt mixtures are usually classified into dense graded, gap graded and open graded. The asphalt mixture of the invention may fall into any of these categories.

The amount of bitumen composition in the asphalt mixture of the present invention will vary depending on the application for which the asphalt is to be used. However, the asphalt mixture used in the present invention preferably comprises in the range of from 1 to 20wt% of the bitumen composition, more preferably in the range of from 2 to 10wt%, and most preferably in the range from 3 to 7wt%, based on total weight of asphalt mixture.

The present invention further provides an asphalt pavement comprising a bitumen composition or asphalt mixture according to the invention, and a process for preparing an asphalt pavement using a bitumen composition or asphalt mixture according to the invention.

### Examples

The invention will now be described by reference to examples which are not intended to be limiting of the invention.

### Preparation of Bitumen Compositions

Details of the bitumen compositions that were prepared are given in table I below. The base bitumen was penetration grade 80/100 bitumen. The crumb rubber was derived from car and truck tyres. The wax was SX 105, a paraffin wax produced by a Fischer Tropsch process, available from Shell ®. The polymer was Entira™ Bond 12, available from DuPont; a copolymer of ethylene and glycidyl methacrylate.

The compositions were prepared following the protocol below:
1. The bitumen was heated in an oven at 140°C.
2. The bitumen was stirred under high shear (2000rpm) and the temperature was increased to 163°C.
3. The wax was added under high shear (4000rpm). The mixing period was 5 minutes.
4. The polymer was added under high shear (4000rpm). The mixing period was from 5 to 10 minutes.
5. The crumb rubber was added under high shear (4000rpm) during a period of 3 to 5 minutes.
6. The composition was mixed under high shear for 60 minutes.
7. The composition was mixed under low shear (1000 rpm) to reach full homogeneity.

**Table I**

| | Bitumen (wt%) | Crumb Rubber (wt%) | Wax (wt%) | Glycidyl Polymer (wt%) |
|---|---|---|---|---|
| Comparative Example 1 | 100 | 0 | 0 | 0 |
| Comparative Example 2 | 90 | 10 | 0 | 0 |
| Comparative Example 3 | 89 | 10 | 1 | 0 |
| Comparative Example 4 | 88 | 10 | 2 | 0 |
| Comparative Example 5 | 89 | 10 | 0 | 1 |
| Comparative Example 6 | 89.5 | 10 | 0 | 0.5 |
| Comparative Example 7 | 88 | 10 | 0 | 2 |
| Comparative Example 8 | 88 | 10 | 0 | 2 |
| Example 1 | 89 | 10 | 0.5 | 0.5 |
| Example 2 | 87.7 | 10 | 1.5 | 0.8 |
| Example 3 | 88 | 10 | 1 | 1 |
| Example 4 | 87.5 | 10 | 1.5 | 1 |
| Example 5 | 87.5 | 10 | 1 | 1.5 |
| Example 6 | 87 | 10 | 1 | 2 |
| Comparative Example 9 | 100 | 0 | 0 | 0 |
| Example 7 | 85.8 | 12 | 1.5 | 0.7 |
| Example 8 | 85.5 | 12 | 1.8 | 0.7 |
| Example 9 | 85.6 | 12 | 1.8 | 0.6 |
| Example 10 | 85.7 | 12 | 1.6 | 0.7 |
| Example 11 | 85.9 | 12 | 1.6 | 0.5 |

Comparative Examples 1-8 and Examples 1-6 contained the same type of bitumen. Comparative Example 9 and Examples 7-11 all contained a different bitumen (although both bitumens used were penetration grade 80/100 bitumens). The compositions were characterised by measuring penetration at 25°C (according to ASTM D5), softening point (according to ASTM D36), viscosity at 150°C (according to ASTM D4404) and storage stability after 24 hours and 48 hours at 163°C (according to ASTM D7173). The results are shown in Table II:

**Table II**

| | Penetration at 25°C (dmm) | Softening point (°C) | Viscosity at 150°C mPas (Poise) | Storage Stability | |
|---|---|---|---|---|---|
| | | | | 24 hours (°C) | 48 hours (°C) |
| Comparative Example 1 | 71 | 46.8 | 187(1.87) | - | - |
| Comparative Example 2 | - | 55.9 | 673(6.73) | 7.4 | 7.6 |
| Comparative Example 3 | 53 | 58.2 | 443(4.43) | 8.5 | 8.6 |
| Comparative Example 4 | 49 | 67.6 | 448(4.48) | 10.8 | 11.8 |
| Comparative Example 5 | 58 | 56.6 | 1032(10.32) | 0.6 | 2.2 |
| Comparative Example 6 | 63 | 54.6 | 616(6.16) | 7.0 | 6.6 |
| Comparative Example 7 | 50 | 65.8 | 1757(17.57) | -0.6 | -1.6 |
| Comparative Example 8 | 53 | 63.6 | 1318(13.18) | -3.6 | -4.2 |
| Example 1 | 51 | 55.8 | 573(5.73) | 6.6 | 6.6 |
| Example 2 | 48 | 61.0 | 515(5.15) | 5.2 | 1.6 |
| Example 3 | 50 | 59.8 | 834(8.34) | -2.2 | -1.8 |
| Example 4 | 47 | 57.2 | 636(6.36) | 2.7 | -1.2 |
| Example 5 | 49 | 55.8 | 617(6.17) | 2.2 | 0.6 |
| Example 6 | 40 | 69.6 | 2195? (21.95?) | -3.0 | -2.2 |
| Comparative Example 9 | 93 | 45.8 | 180(1.80) | - | 0.0 |
| Example 7 | 44 | 64.0 | 932(9.32) | - | -0.4 |
| Example 8 | 45 | 69.4 | 801(8.01) | - | -5.0 |
| Example 9 | 44 | 67.6 | 805(8.05) | - | 0.2 |
| Example 10 | 44 | 67.6 | 768(7.68) | - | -5.8 |
| Example 11 | 45 | 67.0 | 750(7.50) | - | -1.4 |

| | | | | | |
|---|---|---|---|---|---|
| (NB The validity of the viscosity value for example 6 is questionable.) | | | | | |

The storage stability is preferably from -4°C to 4°C (this is the difference in softening points taken from different positions in the stored sample). The viscosity is preferably between 3 and 9 Poise (300 and 900 mPas). Comparative Example 1 (bitumen with no additives) has very low viscosity.

Comparative example 2 (bitumen plus crumb rubber) shows that addition of crumb rubber increases the viscosity but also provides a composition with unacceptable storage stability. Adding wax to the crumb-rubber modified bitumen (comparative examples 3 and 4) increases the softening point and reduces the penetration, but further worsens the storage stability. Adding the glycidyl-functionalised polymer to the crumb-rubber modified bitumen (comparative examples 5-8), particularly at greater than 0.5wt%, improves the storage stability of the compositions but provides unacceptably high viscosity. The Examples of the invention (examples 1-11) show that adding the glycidyl-functionalised polymer counteracts the negative effect of the wax on the storage stability, yet retains the positive effect of the wax on viscosity.

## Claims

1. A bitumen composition comprising:
(a) 20 to 96 wt% bitumen;
(b) 3 to 80 wt% of crumb rubber;
(c) 0.1 to 10 wt% of a polymer comprising glycidyl functional groups; and
(d) 0.3 to 5 wt% of a wax;
wherein the weight percentages are based upon the weight of the bitumen composition.

2. A bitumen composition according to claim 1, wherein the polymer comprising glycidyl functional groups is a copolymer of ethylene and glycidyl acrylate or methacrylate, or a terpolymer of ethylene, alkyl acrylate or methacrylate and glycidyl acrylate or methacrylate.

3. A bitumen composition according to claim 1, wherein the polymer comprising glycidyl functional groups is a grafted polymer comprising glycidyl acrylate or methacrylate grafted onto a polyethylene backbone.

4. A bitumen composition according to any preceding claim, wherein the wax is a paraffin wax resulting from a Fischer-Tropsch process.

5. A bitumen composition according to any one of claims 1 to 3, wherein the wax is ethylene bis-stearamide.

6. A method of preparing a bitumen composition according to any preceding claim, comprising steps of mixing the bitumen, crumb rubber, polymer comprising glycidyl functional groups and wax in a pre-mixing tank to produce a mixture and passing the mixture through a high-shear mill.

7. The method of claim 6, wherein the bitumen, crumb rubber, polymer comprising glycidyl functional groups and wax are mixed at a temperature not exceeding 165°C.

8. An asphalt mixture comprising a bitumen composition according to any one of claims 1 to 5 and further comprising aggregate.

9. An asphalt pavement comprising a bitumen composition according to any one of claims 1 to 5 or an asphalt mixture according to claim 8.

## Patentansprüche

1. Bitumenzusammensetzung, umfassend:
(a) 20 bis 96 Gew.-% Bitumen;
(b) 3 bis 80 Gew.-% Gummibrocken;
(c) 0,1 bis 10 Gew.-% eines Polymers umfassend Glycidyl-Funktionsgruppen; und
(d) 0,3 bis 5 Gew.-% eines Wachses;
wobei die Gewichtsprozentsätze auf dem Gewicht der Bitumenzusammensetzung beruhen.

2. Bitumenzusammensetzung nach Anspruch 1, wobei das Polymer umfassend Glycidyl-Funktionsgruppen ein Copolymer aus Ethylen und Glycidylacrylat oder Glycidylmethacrylat, oder ein Terpolymer aus Ethylen, Alkylacrylat oder Alkylmethacrylat und Glycidylacrylat oder Glycidylmethacrylat ist.

3. Bitumenzusammensetzung nach Anspruch 1, wobei das Polymer umfassend Glycidyl-Funktionsgruppen ein aufgepfropftes Polymer ist, umfassend Glycidylacrylat oder Glycidylmethacrylat, das auf einer Polyethylen-Hauptkette aufgepfropft ist.

4. Bitumenzusammensetzung nach einem der vorherigen Ansprüche, wobei das Wachs ein Paraffinwachs resultierend aus einer Fischer-Tropsch-Synthese ist.

5. Bitumenzusammensetzung nach einem der Ansprüche 1 bis 3, wobei das Wachs ein Distearylethylendiamid ist.

6. Verfahren zur Herstellung einer Bitumenzusammensetzung nach einem der vorherigen Ansprüche, umfassend die Schritte des Mischens des Bitumens, der Gummibrocken, des Polymers umfassend Glycidyl-Funktionsgruppen und Wachses in einem Vormischbehälter zum Herstellen eines Gemischs und Leiten des Gemischs durch eine Hochschermühle.

7. Verfahren nach Anspruch 6, wobei das Bitumen, die Gummibrocken, das Polymer umfassend Glycidyl-Funktionsgruppen und Wachs bei einer Temperatur von nicht mehr als 165°C gemischt werden.

8. Asphaltgemisch, umfassend eine Bitumenzusammensetzung nach einem der Ansprüche 1 bis 5 und ferner umfassend Zuschlagstoff.

9. Asphaltstraßenbelag, umfassend eine Bitumenzusammensetzung nach einem der Ansprüche 1 bis 5, oder ein Asphaltgemisch nach Anspruch 8.

## Revendications

1. Composition de bitume comprenant :
(a) 20 à 96% en poids de bitume ;
(b) 3 à 80% en poids de caoutchouc granulaire ;
(c) 0,1 à 10% en poids d'un polymère comprenant des groupes fonctionnels glycidyle ; et
(d) 0,3 à 5% en poids d'une cire ;
dans laquelle les pourcentages en poids sont basés sur le poids de la composition de bitume.

2. Composition de bitume selon la revendication 1, dans laquelle le polymère comprenant des groupes fonctionnels glycidyle est un copolymère d'éthylène et d'acrylate ou méthacrylate de glycidyle, ou un terpolymère d'éthylène, d'acrylate ou de méthacrylate d'alkyle et d'acrylate ou de méthacrylate de glycidyle.

3. Composition de bitume selon la revendication 1, dans laquelle le polymère comprenant des groupes fonctionnels glycidyles est un polymère greffé comprenant de l'acrylate ou du méthacrylate de glycidyle greffé sur un squelette polyéthylène.

4. Composition de bitume selon l'une quelconque des revendications précédentes, dans laquelle la cire est une cire de paraffine issue d'un procédé Fischer-Tropsch.

5. Composition de bitume selon l'une quelconque des revendications 1 à 3, dans laquelle la cire est de la bis-stéaramide d'éthylène.

6. Procédé de préparation d'une composition de bitume selon l'une quelconque des revendications précédentes, comprenant les étapes de mélange du bitume, du caoutchouc granulaire, du polymère comprenant des groupes fonctionnels glycidyle et de la cire dans un réservoir de prémélange pour produire un mélange et de passage du mélange à travers un broyeur à cisaillement élevé.

7. Procédé selon la revendication 6, dans lequel le bitume, le caoutchouc granulaire, le polymère comprenant des groupes fonctionnels glycidyle et la cire sont mélangés à une température ne dépassant pas 165°C.

8. Mélange d'asphalte comprenant une composition de bitume selon l'une quelconque des revendications 1 à 5 et comprenant en outre un agrégat.

9. Revêtement d'asphalte comprenant une composition de bitume selon l'une quelconque des revendications 1 à 5 ou un mélange d'asphalte selon la revendication 8.
